# EUROPÄISCHE PATENTSCHRIFT

(11) **EP 2 133 762 B1**
(45) Veröffentlichungstag und Bekanntmachung des Hinweises auf die Patenterteilung: **21.11.2012**
(21) Anmeldenummer: 08010463.1
(22) Anmeldetag: 09.06.2008
(51) Int. Cl.: G05B 9/03

(54) **Verfahren zum Überwachen einer Zeitbasis einer Datenverarbeitungseinheit und Datenverarbeitungseinheit**
Method for monitoring the time basis of a data processing unit and data processing unit
Procédé de surveillance d'une base de temps d'une unité de traitement de données et unité de traitement de données

(43) Veröffentlichungstag der Anmeldung: 16.12.2009
(73) Patentinhaber: SIEMENS AKTIENGESELLSCHAFT, 80333 München (DE)
(72) Erfinder: Hubert, Johannes, 90471 Nürnberg (DE); Mattes, Rainer, 54349 Trittenheim (DE); Weber, Uwe, 90542 Eckental (DE)

(56) Entgegenhaltungen:
- EP-A- 1 916 581
- DE-C1- 10 056 408

## Beschreibung

Die Erfindung betrifft ein Verfahren zum Überwachen einer Zeitbasis einer Datenverarbeitungseinheit, wobei über einen Schwingquarz eine elektrische Schwingung und aus der Schwingung ein Signal erzeugt wird. Des Weiteren betrifft die Erfindung eine Datenverarbeitungseinheit mit Mitteln zum Überwachen einer Zeitbasis, wobei über einen Schwingquarz eine elektrische Schwingung und aus der Schwingung ein Taktsignal erzeugbar ist.

Technische Systeme wie Industrieanlagen, Autos, Kraftwerke, Fluggeräte, Unterwasserfahrzeuge, allgemein Schiffe, erfordern ein Höchstmaß an Sicherheit, um das Risiko für Mensch und Umwelt zu minimieren. Zuvor genannte Anlagen und Systeme werden in der Regel mittels Datenverarbeitungseinheiten gesteuert. Solche Datenverarbeitungseinheiten sind Bestandteil von fehlersicheren Steuerungssystemen, kurz F-System genannt, die nach Auftreten eines Fehlers oder eines Störfalls in einen definierten, unkritischen Zustand übergeben. Beispielsweise könnte ein Förderband gestoppt werden oder ein Reaktor könnte frühzeitig abgeschaltet werden, bevor er eine kritische Temperatur erreicht. Durch die Anwendung solcher F-Systeme lässt sich die Wahrscheinlichkeit einer Gefahrensituation auf ein vertretbares Maß reduzieren. Ein Aspekt bei diesen F-Systemen ist die Bereitstellung und Verlässlichkeit einer "sicheren" Systemzeit.

Bisher wurde die sichere Systemzeit bzw. eine Zeitbasis in F-Systemen mittels eines, zusätzlich zu dem bereits genannten Schwingquarz, zweiten Hardwaretimers gebildet. Dies hat den Nachteil, dass nur derjenige Hersteller der unterlagerten Hardware diesen zweiten Hardwaretimer implementieren kann. Durch diese Restriktion ist der Anwender von der Hardware abhängig. In der EP 1 916 581 A2 wird eine Vorrichtung und ein Verfahren vorgestellt, welche es erlauben, eine Überkreuz-Überprüfung eines zwei Prozessoren Sicherheitssystems durchzuführen. Aber auch hier werden für jede der beiden Prozessoren (CPU's) je zwei unabhängige Hardware-Timer eingesetzt.

Ebenso ist es von Nachteil, dass schleichende Veränderungen, z.B. wegen Bauteilalterungen, nicht erkannt werden können.

Es ist die Aufgabe der Erfindung ein Verfahren für Datenverarbeitungseinheiten für F-Systeme zur Verfügung zu stellen, welches das Bereitstellen einer "sicheren" Zeitbasis vereinfacht.

Die Aufgabe für das eingangs genannte Verfahren wird dadurch gelöst, dass zur Überprüfung einer Genauigkeit des Taktsignals eine erste Task zyklisch in einem Abstand einer ersten Zeitdauer aufgerufen wird und dadurch ein Zählwert verändert wird, wobei in einer zweiten Task, welche zyklisch in einem Abstand einer zweiten Zeitdauer aufgerufen wird, eine Operation auf den Zählwert angewendet wird und ein Ergebnis der Operation mit dem vorgebbaren Grenzwert verglichen wird, wobei bei einer Abweichung des Ergebnisses von dem Grenzwert eine Aktion ausgelöst wird. Es wird also in einem ersten Aufrufintervall ständig wiederholend die erste Task, welche ein Programm zum Lösen einer bestimmten Aufgabe darstellt, zyklisch aufgerufen und ein Zählwert wird unter bestimmten Bedingungen verändert. Beispielsweise wird der Zählwert zyklisch inkrementiert. Diese Veränderung wird mittels einer zweiten Task, welche ebenfalls ein Programm für eine bestimmte Teilaufgabe darstellt, kontrolliert bzw. beobachtet. Vorzugsweise sind dabei die zweite Zeitdauer bzw. das zweite Aufrufintervall größer als die erste Zeitdauer bzw. das erste Aufrufintervall.

In einer vorteilhaften Ausgestaltung für das Verfahren, wird mit der zweiten Zeitdauer und der ersten Zeitdauer ein Verhältniswert gebildet, welcher für den Vergleich mit dem Zählwert benutzt wird. Beispielsweise könnte die Operation, welche zyklisch ausgeführt wird, als ein Heraufzählen des Zählwertes ausgelegt sein. Dabei wird die erste Task, beispielsweise zyklisch jede Millisekunde von einem Interupt aufgerufen und der Zählwert wird um eins inkrementiert. In der zweiten Task, welche beispielsweise mit dem zweiten Aufrufintervall von 50 Millisekunden aufgerufen wird, wird überprüft, ob sich der Zählwert entsprechend der Anzahl seiner Aufrufe um den Faktor 50 erhöht hat, womit sichergestellt wäre, dass ein der Datenverarbeitungseinheit zugrundeliegendes Betriebssystem in seiner Interupt-Latenzzeit genügend genau arbeitet. Ist der ausgelesene Wert für den Zählwert beispielsweise kleiner 49 oder größer 51, würde eine die Sicherheit der Datenverarbeitungseinheit beeinflussende Aktion ausgelöst werden. Bei den genannten Grenzwerten wäre eine Toleranz von ca. 2% eingehalten.

Vorzugsweise wird bei dem Verfahren durch die Aktion die Datenverarbeitungseinheit in einen definierten Zustand überführt.

Weiterhin ist es vorteilhaft, wenn zum Aufrufen der ersten Task und der zweiten Task auf der Datenverarbeitungseinheit ein Echtzeitbetriebssystem genutzt wird. Denkbar ist auch eine Echtzeiterweiterung eines Standardbetriebssystems. Die Verwendung eines Echtzeitbetriebssystems auf einer beliebigen Hardware, beispielsweise auf einem Personal Computer, ermöglicht es, dass auch auf nicht spezial Systemen die Sicherheit zur Bildung einer "sicheren" Zeitbasis und damit der Absicherung eines Aufrufes einer Task für ein Sicherheitsprogramm gegeben ist. Der Einsatz des erfindungsgemäßen Verfahrens auf einem Echtzeitbetriebssystem, welche auch als RTOS (Real Time Operating System) bezeichnet werden, erhöht die Sicherheit für die Zeitbasis. Da Echtzeitbetriebssysteme durch die folgenden Merkmale charakterisiert sind, ist die Überwachung einer Zeitbasis auf einer Datenverarbeitungseinheit mit einem Echtzeitbetriebssystem von besonderem Vorteil. Bei einem Echtzeitbetriebssystem herrschen definiert angebbare Interupt-Antwortzeiten sowie ein deterministisches zeitliches Verhalten, dass besonders bei der zyklischen Einplanung von Prozessen notwendig ist. Ablauffähige Programme (Tasks bzw. Prozesse) müssen prioritätsgesteuert ablaufen. Eine Lastunabhängigkeit muss garantiert werden. Eine Multitaskingfähigkeit muss gegeben sein, welche einen Prozessor der Datenverarbeitungseinheit an andere zum Ablauf freigegebene Prozesse vergibt, wenn die Prozessortätigkeit durch einen Interupt, Timerablauf etc. unterbrochen wurde. Eine effiziente und schnelle Interprozesskommunikation muss möglich sein. Ein guter und schneller Durchgriff auf den angeschlossenen technischen Prozess ist erforderlich. Die meisten Betriebssysteme von speicherprogrammierbaren Steuerungen bzw. Automatisierungssystemen weisen genau diese Eigenschaften auf, damit sicherheitsgerichtete digitale Prozessregelungen möglich sind.

Vorzugsweise wird bei der Kontrolle des Zählwertes in der zweiten Task eine Sicherheitstask aufgerufen.

Zur zusätzlichen Erhöhung einer Genauigkeit von Zeit-Zählern ist es besonders vorteilhaft, dass ein erster Zähler in der zweiten Task abgefragt und eine Differenz zwischen seinem aktuellen Wert und dem Wert der vorausgegangenen Abfrage gebildet wird, und aus dieser Differenz ein codierter Wert gebildet wird. Beispielsweise sind solche Zeit-Zähler sogenannte IEC-Timer, welche von dem Systemtakt, also dem Taktsignal, abgeleitet werden. Diese IEC-Timer haben beispielsweise eine Millisekunden-Auflösung. Der codierte Wert bildet ein Element der Struktur der IEC-Timer. Eine dabei eingesetzte CPU stellt eine Systemfunktion zur Verfügung mittels derer die Differenz zum letzten Aufruf gebildet werden kann. Beispielsweise wird bei Distributed Safey Systemen mit einem "coded Processing" Mechanismus zur Datensicherung gearbeitet. Der codierte Wert ist dabei ein redundanter Wert, der vorzugsweise mittels einer Primzahl gebildet wird.

Um auf vorteilhafte Weise die Sicherheit bei durch Automatisierungssysteme gesteuerten Prozessen zu erhöhen, wird das Verfahren für eine Datenverarbeitungseinheit in einem fehlersicheren Automatisierungssystem eingesetzt.

Mit der eingangs genannten Datenverarbeitungseinheit wird die Aufgabe der Erfindung dadurch gelöst, dass die Mittel zur Überprüfung einer Genauigkeit des Taktsignals ausgestaltet sind und eine erste Task umfassen, welche zyklisch in einem Abstand einer ersten Zeitdauer aufgerufen wird und dabei ein Zählwert verändert wird, und wobei die Mittel weiterhin eine zweite Task umfassen, welche zyklisch in einem Abstand einer zweiten Zeitdauer aufgerufen wird und mit der zweiten Task auf den Zählwert eine Operation anwendbar ist, wobei ein Ergebnis der Operation mit einem vorgebbaren Grenzwert vergleichbar ist, wobei bei einer Abweichung des Zählwertes von dem Grenzwert eine Aktion auslösbar ist. Durch das programmtechnische Überprüfen einer Zeitdauer für ein Taktsignal, welches mit einem Schwingquarz erzeugt wird, kann auf vorteilhafte Weise auf den Einsatz eines zweiten Hardware-Timers verzichtet werden. Eine derartige Verarbeitungseinheit kann so dann mit Vorteil auf hardwareunabhängigen Systemen eingesetzt werden.

Vorzugsweise sind die Mittel zum Ablauf eines Echtzeitbetriebssystems ausgestaltet. Für den Einsatz in F-Systemen ist die Datenverarbeitungseinheit vorteilhafter Weise als eine echtzeitfähige Automatisierungskomponente zum Automatisieren eines industriellen Prozesses ausgestaltet.

Solch eine Automatisierungskomponente ist mit besonderem Vorteil als ein Rechner mit der Funktion einer Software-Steuerung ausgestaltet. Vorzugsweise ist der Rechner ein Personal-Computer, für die Steuerungsaufgaben wird dabei der Prozessor des Personal-Computers genutzt. Für eine Kommunikation mit einem Feldbus ist vorzugsweise ein zusätzlicher Kommunikationsprozessor vorhanden. Auch Einsteckkarten können vorzugsweise als Slot-PLC in Steuerungscomputer oder in den Personal Computer eingesteckt werden und über diese Einsteckkarte als speicherprogrammierbaren Steuerung kann ein industrieller Prozess wie mit einer hardwaremäßig ausgestalteten speicherprogrammierbaren Steuerung gesteuert werden.

Im Folgenden wird die Erfindung anhand der in den Figuren dargestellten Ausführungsbeispiele näher beschrieben und erläutert. Es zeigt:
- FIG 1: Aufrufintervalle für eine erste und zweite Task,
- FIG 2: einen Programmablauf und
- FIG 3: eine Datenverarbeitungseinheit.

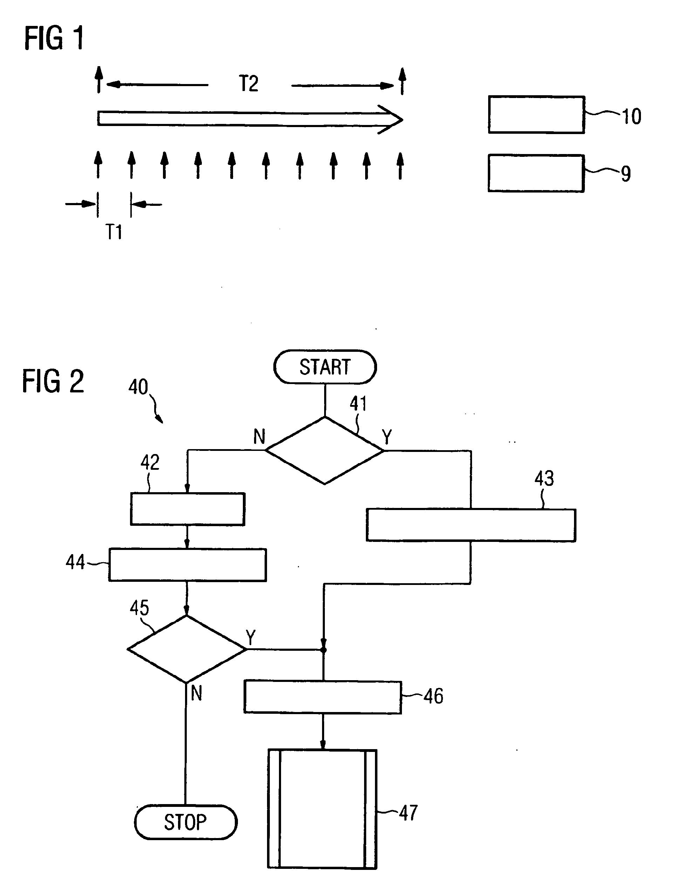

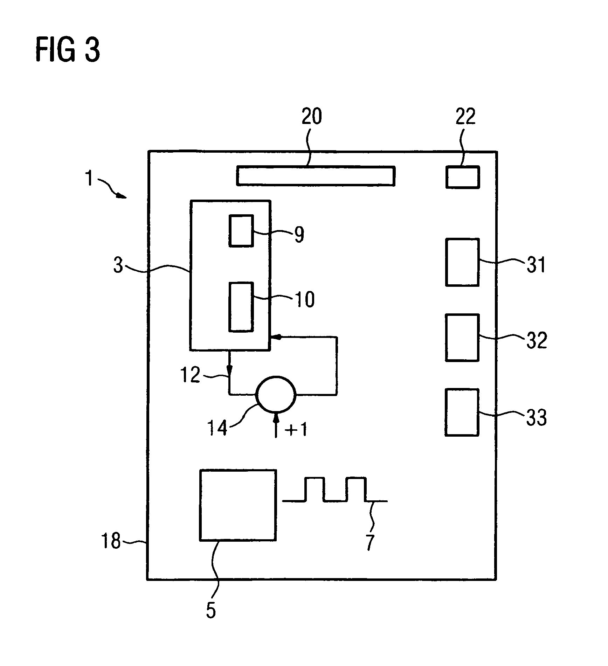

Gemäß FIG 1 sind eine erste Zeitdauer T1 und eine zweite Zeitdauer T2 für den Aufruf einer ersten Task 9 und einer zweiten Task 10 dargestellt. Die jeweils nach oben zeigenden kleineren Pfeile stellen den Interuptaufruf der jeweiligen Task dar. Dabei wird die erste Taks 9 zyklisch in einer ersten Zeitdauer T1 von jeweils einer Millisekunde aufgerufen. Der längs liegende größere, nach rechts zeigende Pfeil stellt dabei den zeitlichen Verlauf dar. Die zweite Task 10 wird zyklisch in einem Abstand einer zweiten Zeitdauer T2 von 10 Millisekunden aufgerufen. Die erste Taks 9 und die zweite Task 10 laufen auf einer Datenverarbeitungseinheit 1 (siehe FIG 3) ab, wobei über einen Schwingquarz 5 eine elektrische Schwingung und aus der Schwingung ein Taktsignal 7 erzeugt wird, wobei zur Überprüfung einer Genauigkeit bzw. einer Abweichung des Taktsignals 7 die erste Task 9 zyklisch in dem Abstand von einer Millisekunde aufgerufen wird und dadurch ein Zählwert 12 verändert wird, wobei in der zweiten Task 10, welche zyklisch in dem Abstand von 10 Millisekunden aufgerufen wird, der Zählwert 12 mit dem zahlenmäßigen Betrag der zweiten Zeitdauer T2 verglichen wird. Bei einer zweiten Zeitdauer T2 von 10 Millisekunden muss der Zählwert 12 also einen Wert von zehn angenommen haben. Wenn der Zählwert 12 kleiner zehn oder größer zehn wäre, würde dies ein Indikator für eine nicht genügende Genauigkeit und damit für eine "unsichere" Systemzeit sein und die Datenverarbeitungseinheit 1 wird in einen definierten Zustand überführt.

Gemäß FIG 2 wird schematisch anhand eines Programmablaufplanes 40 ein Verfahren zur zusätzlichen Absicherung eines Aufrufes eines Unterprogramms 47 dargestellt. Das Unterprogramm 47 hat dabei die Aufgabe eine sichere Zeitbasis aufgrund einer Differenzzeitmessung zu bilden. Nach einem Programmstart, gekennzeichnet durch die Buchstabenfolge START folgt ein erster Vergleich 41. In diesem ersten Vergleich 41 wird ein Altwert mit null verglichen. Folgt aus dem ersten Vergleich 41 das Ergebnis TRUE, also der Altwert ist gleich null, so wird der erste Vergleich 41 über den Y-Zweig verlassen und das Programm kommt an die Stelle einer zweiten Wertzuweisung 43. Fällt der Vergleich in dem ersten Vergleich 41 jedoch negativ aus, also das Ergebnis des Vergleiches 41 ist FALSE, so wird der erste Vergleich 41 über den N-Zweig verlassen und führt in eine erste Wertzuweisung 42.

In der ersten Wertzuweisung 42 bekommt ein Neuwert den Wert eines Zählers zugewiesen. In dem Programmkasten für die zweite Wertzuweisung 43 bekommt ein Altwert den Wert eines Zählers zugewiesen und ein Neuwert ebenfalls den Wert des Zählers zugewiesen. Im Anschluss an die zweite Wertzuweisung 43 folgt die dritte Wertzuweisung 46 in der dem Altwert der Neuwert zugewiesen wird. Darauf hin folgt der Aufruf des Unterprogramms 47 zur Bildung einer sicheren Zeitbasis aufgrund der Differenzzeitmessung des Zählers.

Folgt man weiterhin dem FALSE-Zweig aus dem ersten Vergleich 41 so wird nach der ersten Wertzuweisung 42 in einer Differenzbildung 44, die Differenz zwischen dem Neuwert und dem Altwert gebildet. Diese Differenz geht als Eingangswert in einen zweiten Vergleich 45. In diesem zweiten Vergleich 45 wird eine Abfrage durchgeführt, ob die Differenz gleich einem Sollwert plus einer Toleranz ist. Fällt dieser zweite Vergleich 45 negativ aus, also wird der FALSE-Zweig durchlaufen, so wird das auf einer Datenverarbeitungseinheit 1 ablaufende Programm in einen Stopp-Zustand überführt. Der Stopp-Zustand ist durch die Buchstabenfolge STOP gekennzeichnet und stellt für ein F-System den einen "sicheren" oder "unkritischen" Zustand dar.

FIG 3 zeigt eine Datenverarbeitungseinheit 1, wobei die Datenverarbeitungseinheit 1 Mittel 3 zum Überwachen einer Zeitbasis 20 umfasst. In den Mitteln 3 sind als ablauffähige Programme die erste Taks 9 und die zweite Task 10 implementiert. Der Schwingquarz 5 erzeugt das Taktsignal 7. Mit Hilfe der der ersten Task 9 wird im Abstand von einer Millisekunde der Zählwert 12 mittels der Operation 14, welche als eine Inkrementoperation ausgestaltet ist, jeweils um ein erhöht und den Mitteln 3 zurückgeführt.

Weiterhin weist die Datenverarbeitungseinheit 1 einen ersten Zeitzähler 31, einen zweiten Zeitzähler 32 und einen dritten Zeitzähler 33 auf. Die Zeitzähler 31, 32, 33 sind als IEC-Timer für Millisekunden, Sekunden und für Stunden ausgelegt.

Wie der Schwingquarz 5 in der Datenverarbeitungseinheit 1, werden generell für Taktgeber Quarzoszillatoren verwendet, welche zusätzlich durch einen Watchdog überwacht werden. Eine Fehleranalyse für Fehler in der Zeitbasis 20, welche beispielsweise durch einen defekten Schwingquarz 5 oder durch ein Auslösen des Watchdogs entstehen, hat die Anwendung des erfindungsgemäßen Überwachungsverfahrens für die Zeitbasis bestätigt. Denn Ungenauigkeiten in der Taktfrequenz werden ausgeschlossen, da die Taktfrequenz eines Prozessors in der Datenverarbeitungseinheit 1 allein von dem Schwingquarz 5 abhängig ist. Vorgeschaltete PLL's und Prescaling Units (nicht dargestellt) teilen oder vervielfachen das Signal mit einem entsprechenden Faktor ohne eine Ungenauigkeit zu erzeugen. Aus einer Güte des Schwingquarzes 5 und einer Erregerfrequenz ergibt sich eine Bandbreite für einen festgeschriebenen Temperaturbereich in dem die Datenverarbeitungseinheit 1 eingesetzt werden darf. Für eine Taktfrequenz von 10 Megahertz, welche dem Taktsignal 7 entspricht, ergibt sich eine Bandbreite von 400 Hz. Vorzugsweise werden also Schwingquarze 5 mit einer hohen Güte verwendet. Quarzoszillatoren mit einer geringen Güte kommen wegen der daraus resultierenden großen Ungenauigkeiten in der Regel nicht zum Einsatz, d.h. wegen der physikalischen Eigenschaften der Quarzoszillatoren kann hier kein Fehler der Ungenauigkeit unterstellt werden, es sei denn der Quarzoszillator selbst ist defekt. Fällt der Schwingquarz 5 ganz aus, so wird durch einen Watchdog, welcher die Funktionalität des Schwingquarzes 5 überwacht, ein Reset durchgeführt, welcher zu einem Kommunikationsverlust der Datenverarbeitungseinheit 1 mit fehlersicheren Baugruppen führt. Aufgrund des Kommunikationsverlustes schalten die fehlersicheren Baugruppen sodann in den sicheren Zustand.

Schaltet der Watchdog versehentlich ab, führt das ebenfalls zu einem Kommunikationsverlust der Datenverarbeitungseinheit 1 mit den fehlersicheren Baugruppen und diese schalten selbständig in den sicheren Zustand. Fällt der Quarz in subharmonische Schwingungen, dann schalten aufgrund des Kommunikationsverlustes die fehlersicheren Baugruppen in den sicheren Zustand. Fällt der Quarz in superharmonische Schwingungen, dann wird dies z.B. durch den "coded Processing" Mechanismus aufgedeckt.

Weiterhin ist mit dem Verfahren und der Datenverarbeitungseinheit 1 sichergestellt, dass ein Prioritätsklassen-Ablaufsystem richtig arbeitet, in dem beispielsweise Alarme oder Ereignisse mit einer niedrigen Priorität den Zählwert nicht verfälschen können bzw. falls doch, würde solch eine Verfälschung und damit eine Beeinflussung der Zeitbasis durch das hier beschriebene Verfahren aufgedeckt.

Schwingquarze finden hauptsächlich Anwendung in der Elektrotechnik und Nachrichtentechnik; überall dort, wo eine konstante Frequenz oder eine genaue Zeitbasis gebraucht wird. Sie finden sich z. B. in praktisch allen Sendeanlagen, seltener in Empfängern, in Quarzuhren, als Taktgeber in Computern und Mikrocontrollern sowie in Frequenzzählern und digitalen Signalgeneratoren.

## Patentansprüche

1. Verfahren zum Überwachen einer Zeitbasis (20)einer Datenverarbeitungseinheit (1), wobei über einen Schwingquarz (5) eine elektrische Schwingung und aus der Schwingung ein Taktsignal (7) erzeugt wird, wobei zur Überprüfung einer Genauigkeit des Taktsignals (7) eine erste Task (9) zyklisch in einem Abstand einer ersten Zeitdauer (T1) aufgerufen wird und dadurch ein Zählwert (12) verändert wird, wobei in einer zweiten Task (10), welche zyklisch in einem Abstand einer zweiten Zeitdauer (T2) aufgerufen wird, eine Operation (14) auf den Zählwert (12) angewendet wird und ein Ergebnis der Operation (14) mit einem vorgebbaren Grenzwert (16) verglichen wird, wobei bei einer Abweichung des Ergebnisses von dem Grenzwert (16) eine Aktion ausgelöst wird, **dadurch gekennzeichnet , dass** der Aufruf der ersten Task (9) und der Aufruf der zweiten Task (10) auf der Grundlage des Taktsignals (7) durchgeführt wird, wobei durch die programmtechnische Überprüfung der Zeitdauer für das Taktsignal (7), auf den Einsatz eines weiteren Hardware-Timers verzichtet wird.

2. Verfahren nach Anspruch 1, wobei mit der zweiten Zeitdauer (T2) und der ersten Zeitdauer (T1) ein Verhältniswert (22) gebildet wird, welcher für den Vergleich mit dem Zählwert (12) genutzt wird.

3. Verfahren nach Anspruch 1 oder 2, wobei durch die Aktion die Datenverarbeitungseinheit (1) in einen definierten Zustand überführt wird.

4. Verfahren nach einem der Ansprüche 1 bis 3, wobei zum Aufrufen der ersten Task (9) und der zweiten Task (10) auf der Datenverarbeitungseinheit (1) ein Echtzeitbetriebssystem genutzt wird.

5. Verfahren nach einem der Ansprüche 1 bis 4, wobei in der zweiten Task (10) eine Sicherheitstask aufgerufen wird.

6. Verfahren nach einem der Ansprüche 1 bis 5, wobei zusätzlich zur Erhöhung einer Genauigkeit von Zeit-Zählern (31, 32, 33) ein erster Zähler (31) in der zweiten Task (10) abgefragt und eine Differenz zwischen seinem aktuellen Wert und dem Wert der vorausgegangenen Abfrage gebildet wird, und aus dieser Differenz ein codierter Wert gebildet wird.

7. Verfahren nach einem der Ansprüche 1 bis 6, wobei das Verfahren für die Datenverarbeitungseinheit in einem fehlersicheren Automatisierungssystem eingesetzt wird.

8. Datenverarbeitungseinheit (1) mit Mitteln (3) zum Überwachen einer Zeitbasis, mit einen Schwingquarz (5) zum Erzeugen einer elektrischen Schwingung und eines Taktsignals (7), wobei die Mittel (3) zur Überprüfung einer Genauigkeit des Taktsignals (7) ausgestaltet sind und eine erste Task (9) umfassen, welche zyklisch in einem Abstand einer ersten Zeitdauer (T1) aufgerufen wird und dabei ein Zählwert (12) verändert wird, und wobei die Mittel (3) weiterhin eine zweite Task (10) umfassen, welche zyklisch in einem Abstand einer zweiten Zeitdauer (T2) aufgerufen wird und dadurch auf den Zählwert (12) eine Operation (14) angewendet wird, wobei ein Ergebnis der Operation (14) mit einem vorgebbaren Grenzwert (16) vergleichbar ist, wobei bei einer Abweichung des Zählwertes (12) von dem Grenzwert (16) eine Aktion auslösbar ist, **dadurch gekennzeichnet, dass** die erste Task (9) und die zweite Task (10) in den Mitteln (3) derart ausgestaltet sind, dass sie auf der Grundlage des Taktsignals (7) über eine einzige Zeitbasis (20) programmtechnisch aufgerufen werden und dadurch ein weiterer Hardware-Timer nicht notwendig ist.

9. Datenverarbeitungseinheit (1) nach Anspruch 8, wobei die Mittel (3) zum Ablauf eines Echtzeitbetriebssystem ausgestaltet sind.

10. Datenverarbeitungseinheit (1) nach Anspruch 8 oder 9, wobei diese als eine Automatisierungskomponente zum Automatisieren eines industriellen Prozesses ausgestaltet ist.

11. Datenverarbeitungseinheit (1) nach Anspruch 10, wobei die Automatisierungskomponente als ein Rechner mit der Funktion einer Software-Steuerung ausgestaltet ist.

## Claims

1. Method for monitoring a time base (20) of a data processing unit (1), wherein an electrical oscillation is generated via a quartz oscillator (5) and a clock signal (7) is generated from the oscillation, wherein, for checking the accuracy of the clock signal (7), a first task (9) is called cyclically at an interval of a first period of time (T1) and through this a count value (12) is modified, wherein in a second task (10), which is called cyclically at an interval of a second period of time (T2), an operation (14) is applied to the count value (12) and a result of the operation (14) is compared with a predetermined limit value (16), wherein, if the result deviates from the limit value (16), an action is initiated, **characterised in that** the first task (9) and the second task (10) are called on the basis of the clock signal (7), wherein the checking of the period of time for the clock signal (7) by the program means that use of a further hardware timer is dispensed with.

2. Method according to claim 1, wherein a ratio value (22) which is used for the comparison with the count value (12) is formed with the second period of time (T2) and the first period of time (T1).

3. Method according to claim 1 or 2, wherein the data processing unit (1) is changed to a defined status by the action.

4. Method according to one of claims 1 to 3, wherein a real-time operating system is used on the data processing unit (1) to call the first task (9) and the second task (10).

5. Method according to one of claims 1 to 4, wherein a security task is called in the second task (10).

6. Method according to one of claims 1 to 5, wherein in addition to increasing the accuracy of timers (31, 32, 33), a first timer (31) is interrogated in the second task (10) and a difference between its current value and the value of the previous interrogation is formed, and a coded value is formed from this difference.

7. Method according to one of claims 1 to 6, wherein the method for the data processing unit is used in a fault-tolerant automation system.

8. Data processing unit (1) with means (3) for monitoring a time base, with a quartz oscillator (5) for generating an electrical oscillation and a clock signal (7), wherein the means (3) are embodied for monitoring an accuracy of the clock signal (7) and comprise a first task (9) which is called cyclically at an interval of a first period of time (T1) and when it is called a count value (12) is changed, and wherein the means (3) also comprise a second task (10), which is called cyclically at an interval of a second period of time (T2) and through this an operation (14) is applied to the count value, wherein a result of an operation (14) is able to be compared with a predeterminable limit value (16), wherein an action is able to be initiated if the count value (12) deviates from a limit value (16), **characterised in that** the first task (9) and the second task (10) in the means (3) are embodied such that they are called on the basis of the clock signal (7) via a single time base (20) by the program thereby rendering a further hardware timer unnecessary.

9. Data processing unit (1) according to claim 8, with the means (3) being embodied for the execution of a real-time operating system.

10. Data processing unit (1) according to claim 8 or 9, wherein this is embodied as an automation component for automating an industrial process.

11. Data processing unit (1) according to claim 10, wherein the automation component is embodied as a computer with the function of a software control.

## Revendications

1. Procédé de contrôle d'une base de temps ( 20 ) d'une unité ( 1 ) de traitement de données, dans lequel on produit, par un quartz ( 5 ) oscillant, une oscillation électrique et, à partir de l'oscillation, un signal ( 7 ) d'horloge, dans lequel, pour le contrôle de la précision du signal ( 7 ) d'horloge, on appelle une première tâche ( 9 ) cycliquement dans l'espace d'un premier laps de temps ( T1 ) et on modifie ainsi une valeur ( 12 ) de compte, dans lequel, dans une deuxième tâche ( 10 ), qui est appelée cycliquement dans l'espace d'un deuxième laps de temps ( T2 ), on applique une opération ( 14 ) à la valeur ( 12 ) de compte et on compare un résultat de l'opération ( 14 ) à une valeur ( 16 ) limite pouvant être prescrite, dans lequel, si le résultat s'écarte de la valeur ( 16 ) limite, on déclenche une action, **caractérisé en ce que** l'on effectue l'appel de la première tâche ( 9 ) et l'appel de la deuxième tâche ( 10 ) sur la base du signal ( 7 ) d'horloge, dans lequel, par le contrôle en technique de programme de la durée du signal ( 7 ) d'horloge, on renonce à l'utilisation d'une autre minuterie en matériel.

2. Procédé suivant la revendication 1, dans lequel on forme, avec le deuxième laps de temps ( T2 ) et le premier laps de temps ( T1 ), un rapport ( 22 ) que l'on utilise pour la comparaison avec la valeur ( 12 ) de compte.

3. Procédé suivant la revendication 1 ou 2, dans lequel on met par l'action l'unité ( 1 ) de traitement de données dans un état défini.

4. Procédé suivant l'une des revendications 1 à 3, dans lequel, pour appeler la première tâche ( 9 ) et la deuxième tâche ( 10 ) sur l'unité ( 1 ) de traitement de données, on utilise un système de fonctionnement en temps réel.

5. Procédé suivant l'une des revendications 1 à 4, dans lequel on appelle une tâche de sécurité dans la deuxième tâche ( 10 ).

6. Procédé suivant l'une des revendications 1 à 5, dans lequel supplémentairement, pour augmenter la précision de compteurs ( 31, 32, 33 ) de temps, on appelle un deuxième compteur ( 31 ) dans la deuxième tâche ( 10 ) et on forme une différence entre sa valeur présente et la valeur des appels précédents et on forme une valeur codée à partir de cette différence.

7. Procédé suivant l'une des revendications 1 à 6, dans lequel on utilise le procédé pour l'unité de traitement de données dans un système d'automatisation à l'épreuve des erreurs.

8. Unité ( 1 ) de traitement de données comprenant des moyens ( 3 ) de contrôle d'une base de temps, un quartz ( 5 ) oscillant de production d'une oscillation électrique et un signal ( 7 ) d'horloge, les moyens ( 3 ) étant conformés pour le contrôle de la précision du signal ( 7 ) d'horloge et comprenant une première tâche ( 9 ), qui est appelée cycliquement dans l'espace d'un premier laps de temps ( T1 ), et une valeur ( 12 ) de compte étant ainsi modifiée et dans laquelle les moyens comprennent, en outre, une deuxième tâche ( 10 ), qui est appelée cycliquement dans l'espace d'un deuxième laps de temps ( T2 ), et qu'ainsi une opération ( 14 ) est appliquée à la valeur ( 12 ) de compte, dans laquelle un résultat de l'opération ( 14 ) peut être comparé à une valeur ( 16 ) limite pouvant être prescrite, dans laquelle, s'il y a écart entre la valeur ( 12 ) de compte et la valeur ( 16 ) limite, une action peut être déclenchée, **caractérisée en ce que** la première tâche ( 9 ) et la deuxième tâche ( 10 ) sont conformées dans les moyens ( 3 ), de manière à ce qu'elles soient appelées en technique de programme sur la base du signal ( 7 ) d'horloge par l'intermédiaire d'une base de temps ( 20 ) unique et qu'ainsi une autre minuterie en matériel ne soit pas nécessaire.

9. Unité ( 1 ) de traitement de données suivant la revendication 8, dans laquelle les moyens ( 3 ) sont conformés pour le déroulement d'un système de fonctionnement en temps réel.

10. Unité ( 1 ) de traitement de données suivant la revendication 8 ou 9, dans laquelle celle-ci est conformée en composant d'automatisation pour l'automatisation d'une opération industrielle.

11. Unité ( 1 ) de traitement de données suivant la revendication 10, dans laquelle le composant d'automatisation est conformé en ordinateur ayant la fonction d'une commande logiciel.
